# DEMANDE DE BREVET EUROPEEN

(11) **EP 0 860 241 A2**
(43) Date de publication de la demande: **26.08.1998**
(21) Numéro de dépôt: 98420011.3
(22) Date de dépôt: 23.01.1998
(51) Int. Cl.: B25B 11/00

(54) **Outil de positionnement pour carrosier**

(30) Priorité: 30.01.1997 FR 9701245
(71) Demandeur: Vision-pro, 69480 Ambérieux d'Azergues (FR)
(72) Inventeur: Canovas, Ginès, 69480 Amberieux D'Azergues (FR); O'Burill, Alain, 69650 Saint Germain au Mont D'Or (FR)
(74) Mandataire: Perrier, Jean-Pierre

(57) **Abrégé**

Cet outil de positionnement pour carrossier est composé d'un corps longiforme (B), solidaire à chacune de ses deux extrémités d'un moyen de fixation (A1, A2) sur une surface lisse telle que ventouse à levier ou aimant à levier.

Selon l'invention, le corps (2) de chacun des moyens de fixation (A1, A2) est muni d'un organe de liaison fileté (10 ou 12), de type vis ou écrou, coopérant avec un organe complémentaire (12 ou 10), de type écrou ou vis, ménagé aux extrémités d'un corps de liaison (B) constitué par un flexible (14) conservant la forme qui lui est donnée manuellement et choisi parmi une série de plusieurs flexibles de longueurs différentes.

## Description

L'invention est relative à un outil de positionnement pour carrossier.

Pour déplacer des éléments surfaciques, plans ou gauches, tels que des glaces, des pare-brises, mais aussi des tôles ou des éléments de carrosserie, il est connu d'avoir recours à des poignées composées d'un corps rigide, de forme générale en U retourné et dont les deux ailes sont munies de moyens de fixation temporaire avec l'élément à déplacer, tel que aimant ou ventouse.

De tels dispositifs remplissent parfaitement leur fonction lorsqu'il s'agit de déplacer l'élément mais ne conviennent pas pour positionner un élément, plan ou gauche, dans une position formant un angle par rapport à une structure support. Il en est ainsi par exemple pour positionner un pare-brise dans l'encadrement de la carrosserie ou pour positionner deux éléments devant être soudés ou collés entre eux.

Cette inadaptation est la conséquence de la rigidité du corps de poignée qui, même si les moyens de liaison sont articulés par rapport à lui, limite l'angulation relative entre les faces de ces moyens venant en contact avec les éléments à positionner.

Ainsi par exemple, lors de la mise en place d'un pare-brise dans l'encadrement d'une carrosserie, les poignées de manutention ne servent qu'à amener le pare-brise dans l'encadrement et ne contribuent pas à son positionnement. Au contraire, lorsque le pare-brise est mis en place, par engagement de force dans l'anneau élastomère le liant à l'encadrement métallique, au moyen de sangles plates passant sur sa face externe et tirées de l'intérieur de l'habitacle, les sangles qui passent transversalement sur les corps de poignée plaquent les ventouses contre le pare-brise et favorisent leur libération. Cela a pour conséquence de modifier la position du pare-brise et d'interrompre la pose pour le repositionner.

Cet inconvénient est encore plus important avec les pare-brises collés car toute modification de la position du pare-brise juste avant collage, implique une perte de temps importante pour décoller le pare-brise et le repositionner.

La présente invention a pour but de fournir un outil de positionnement permettant de donner à l'élément rapporté une position angulaire quelconque dans l'espace et adaptable instantanément par rapport à l'élément support.

A cet effet, dans l'outil selon l'invention le corps de chacun des moyens de fixation est muni d'un organe de liaison fileté, de type vis ou écrou, coopérant avec un organe complémentaire, de type écrou ou vis, ménagé aux extrémités d'un corps de liaison constitué par un flexible conservant la forme qui lui est donnée manuellement et choisi parmi une série de plusieurs flexibles de longueurs différentes.

Avec cet outil, pour positionner un élément quelconque par rapport à un support, et par exemple un pare-brise ou un élément de carrosserie par rapport à un véhicule, il suffit de fixer l'un des moyens de fixation sur la carrosserie du véhicule, de fixer l'autre moyen de fixation sur l'élément rapporté et de modifier la conformation du flexible reliant les deux éléments jusqu'à ce que l'élément rapporté soit dans la position voulue. Si besoin est, un ou plusieurs autres outils de positionnement peuvent être associés au premier pour mieux supporter la masse de l'élément rapporté ou améliorer la précision de son positionnement.

Bien que cet outil soit plus particulièrement intéressant lorsqu'il est équipé de ventouses à levier, il peut également être équipé d'aimants à levier, c'est à dire d'aimants dans lesquels un levier commande le déplacement d'un noyau, déclenchant ou arrêtant un flux magnétique.

D'autres caractéristiques et avantages ressortiront de la description qui suit en référence au dessin schématique annexé représentant une forme d'exécution d'un outil de positionnement équipé de ventouses.
Figure 1 est une vue en plan par dessus des différents éléments du dispositif avant assemblage,
Figure 2 est une vue partielle de côté en élévation d'un véhicule montrant quelques unes des différentes applications de l'outil.

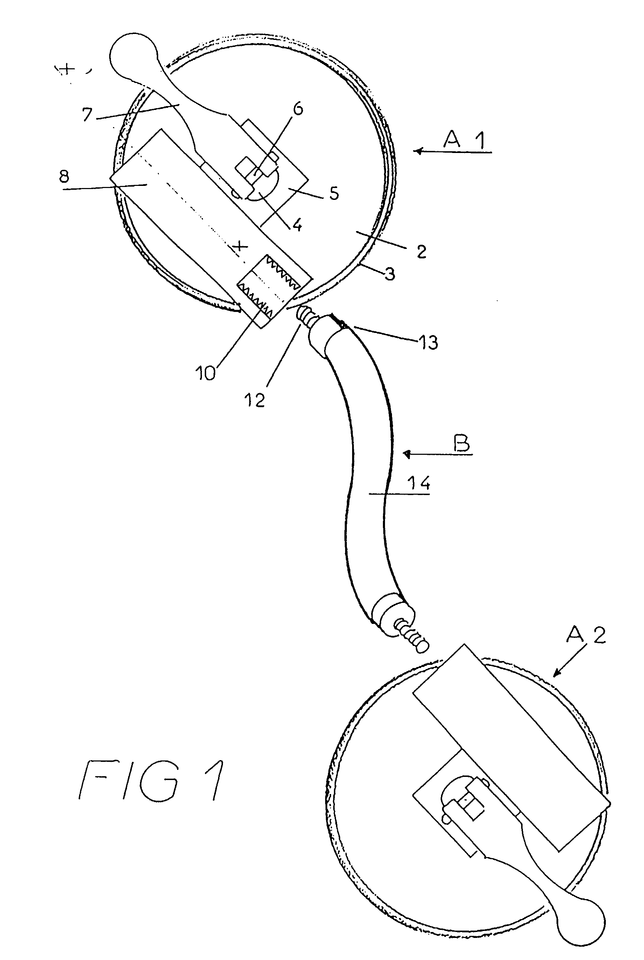

Comme montré à la figure 1, cet outil de positionnement est composé de deux moyens de fixation identiques A1 et A2 reliés par un corps B. Chacun des moyens A1 ou A2 est constitué, dans cette forme d'exécution, par une ventouse à levier, elle-même composée d'un corps 2, en matière synthétique et en forme de cloche ouverte du côté de la surface d'appui, et venant au-dessus d'une ventouse 3, constituée par un disque en élastomère. Ce disque est fixé sur l'une des extrémités d'un tenon 4 traversant un alésage axial ménagé dans un palier 5 du corps 2. Ce tenon est relié, par un axe d'articulation transversal 6, à la partie en forme de chape d'un levier 7 comportant un profil en came venant en appui sur la face extrême du palier 5.

Le corps 2 est également solidaire d'un boîtier latéral 8, moulé avec lui. Ce boîtier comporte un alésage fileté 10 dont l'axe longitudinal x'-x est parallèle à un diamètre du corps 2 et est disposé sensiblement parallèlement au plan d'appui de la ventouse 3.

L'alésage fileté 10 est destiné à coopérer avec une tige filetée 12 saillant axialement d'un embout 13, solidaire de l'une des extrémités du flexible 14 constituant le corps B.

Ce flexible, par exemple constitué par une bande métallique enroulée en hélice et dont les bords sont agrafés les uns aux autres, est semi rigide, c'est à dire peut être conformé manuellement et conserver la position qui lui est donnée.

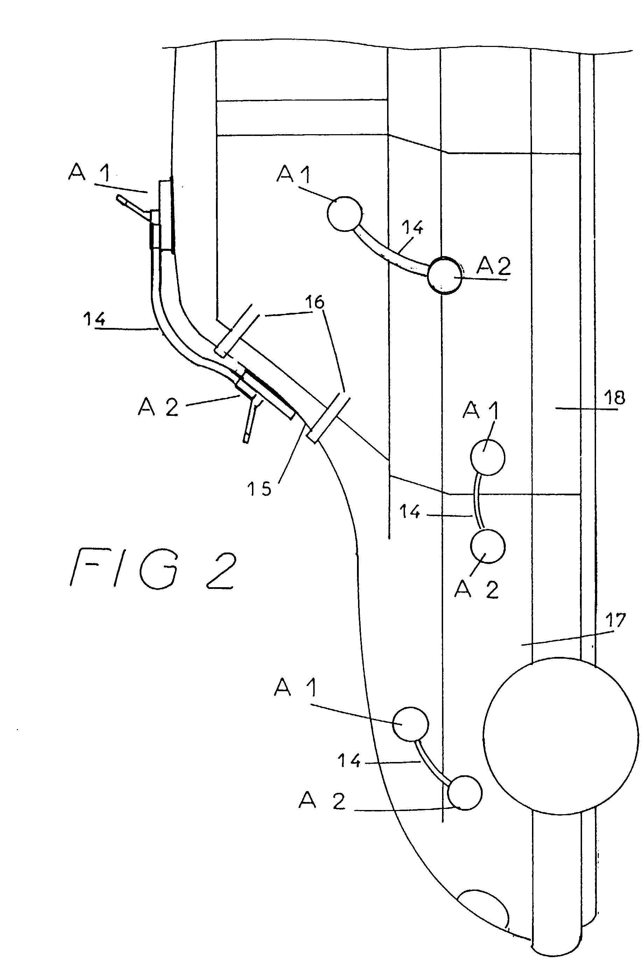

La figure 2 montre que cet outil peut être utilisé pour positionner un pare-brise 15 dans l'encadrement d'un véhicule par une ventouse. Après que la ventouse A1 ait été fixée sur le toit du véhicule, et celle A2 sur le pare-brise, le flexible 14 est conformé manuellement jusqu'à ce que le pare-brise soit dans la bonne position. On notera que, dans ces conditions, la mise en place de force du pare-brise dans le joint de l'encadrement au moyen de sangles 16, venant sur la face externe du pare-brise et tirées de l'intérieur du véhicule à travers l'encadrement, n'affecte en rien la fixation assurée par la ventouse A2, ce qui évite tout incident lors de cette opération.

Cette figure montre aussi que l'outil de positionnement selon l'invention peut également être utilisé pour maintenir des éléments de carrosserie tels qu'une aile 17 ou un panneau de porte 18 pendant leur montage sur la structure de la carrosserie en adaptant aisément le positionnement de chaque élément par conformation des flexibles 14.

Si la majorité des applications sont satisfaites avec un flexible ayant une longueur de 30 cm, celui-ci peut être remplacé par un flexible plus court ou plus long pour des applications particulières.

Bien qu'ayant essentiellement une fonction de positionnement, cet outil peut également être utilisé pour la manutention d'éléments surfaciques plans ou gauches, de faible masse, c'est à dire ayant une masse n'entraînant pas une trop grande déformation des flexibles lorsque ceux-ci sont saisis, comme des poignées, pour lever la charge.

Dans une variante de réalisation, non représentée, les organes de liaison filetée 12 et les embouts 13 ménagés à chacune des extrémités du flexible 14 sont traversés par un alésage axial débouchant dans le flexible et permettant d'insérer dans le corps B une tige de rigidification transformant ce corps en poignée rigide de préhension et l'outil en organe de manutention.

## Revendications

1. Outil de positionnement pour carrossier composé d'un corps longiforme (B), solidaire à chacune de ses deux extrémités d'un moyen de fixation (A1, A2) sur une surface lisse, telle que ventouse à levier ou aimant à levier, caractérisé en ce que le corps (2) de chacun des moyens de fixation (A1, A2) est muni d'un organe de liaison fileté (10 ou 12), de type vis ou écrou, coopérant avec un organe complémentaire (12 ou 10), de type écrou ou vis, ménagé aux extrémités d'un corps de liaison (B) constitué par un flexible (14), conservant la forme qui lui est donnée manuellement, et choisi parmi une série de plusieurs flexibles de longueurs différentes.

2. Outil selon la revendication 1, caractérisé en ce que chacune des extrémités du flexible (14) est solidaire d'un embout (13) avec une tige filetée axiale (12) apte à se visser dans un alésage fileté (10) du corps (2) d'un moyen de fixation (A1 ou A2).

3. Outil selon l'une quelconque des revendications 1 et 2, caractérisé en ce que l'axe longitudinal (x'-x) de la liaison filetée entre l'une des extrémités du flexible (14) et le corps (2) d'un moyen de fixation (A1, A2) est disposé dans un plan parallèle à la face d'appui du moyen de fixation.

4. Outil selon la revendication 3, caractérisé en ce que l'axe longitudinal (x'-x) de la liaison filetée entre l'une des extrémités du flexible (14) et le corps (2) d'un moyen de fixation (A1, A2) est parallèle à un diamètre de ce corps.

5. Outil selon l'une quelconque des revendications 1 à 4 caractérisé en ce que les embouts (13) ménagés aux extrémités du corps de liaison (B) sont chacun traversés par un alésage débouchant dans le flexible (14) et permettant d'insérer dans ce corps (14) une tige de rigidification.
